# EUROPÄISCHE PATENTSCHRIFT

(11) **EP 0 530 557 B1**
(45) Veröffentlichungstag und Bekanntmachung des Hinweises auf die Patenterteilung: **04.01.1995**
(21) Anmeldenummer: 92113795.6
(22) Anmeldetag: 13.08.1992
(51) Int. Cl.: B29B 7/18

(54) **Vorrichtung zum Herstellen von Kautschukmischungen**
Device for making rubber mixtures
Dispositif pour la fabrication de mélanges de caoutchouc

(30) Priorität: 02.09.1991 DE 4129108
(43) Veröffentlichungstag der Anmeldung: 10.03.1993
(73) Patentinhaber: Continental Aktiengesellschaft, 30165 Hannover (DE); Peter, Julius, Dr., 1130 Wien (AT)
(72) Erfinder: Peter, Julius, Dr., A-1130 Wien (AT); Weckerle, Günter, W-3410 Northeim (DE)
(74) Vertreter: Depmeyer, Lothar

(56) Entgegenhaltungen:
- EP-A- 0 277 558
- DE-C- 295 431
- GB-A- 431 012

## Beschreibung

Die Erfindung betrifft eine aus EP-A-0 277 558 bekannte Vorrichtung zum Herstellen von Kautschukmischungen mit einem chargenweise arbeitenden Stempelkneter für die Grundmischung und einem darunter befindlichen, ebenfalls chargenweise arbeitenden, zum Zumischen der reaktiven Zuschläge bestimmten, stempellosen Kneter für die Fertigmischung und zum Kühlen der Mischung, wobei die Grundmischung vom Stempelkneter aus ohne Zwischenlagerung dem stempellosen Kneter zuführbar ist, für die aktiven, mit der Gummimischung in Berührung kommenden, innen gelegenen Kneterflächen eine Oberflächenverschleisschutzschicht vorgesehen und Kühleinrichtungen für die Rotoren und die Tröge der beiden Kneter installiert sind.

Um einem vorzeitigen Verschleiss der vorerwähnten aktiven Flächen, insb. der Rotorflächen vorzubeugen, werden diese Flächen mit einer Oberflächenverschleisschutzschicht versehen, die auf der Basis von Cobalt, Wolfram, Chrom und Kohlenstoff ausgeführt sind, wobei diese Stoffe z.B. als Stellite in Kombination miteinander verwendet werden. Diese besonderen Schichten sind im Regelfalle bei dem heutigen Stand der Technik unumgänglich; sie werden gleichwohl bei Grundmischern und bei Fertigmischern benutzt.

Besonderheiten ergeben sich jedoch bei der eingangs erwähnten Vorrichtung, weil hier in einem stempellosen Kneter das vom Fertigmischer unmittelbar ohne Zwischenlagerung anfallende Mischgut schnell und ausreichend gekühlt und fertiggemischt werden muss.

Darüber hinaus geht die Erfindung von der Erkenntnis aus, dass im Fertigmischer, dem erwähnten stempellosen Kneter, die Abkühlungsgeschwindigkeit des leeren Kneter und die Kühlwirkung beim Fertigmischvorgang von besonderer Bedeutung sind. Die Abkühlgeschwindigkeit des eben geleerten Kneters ist wichtig, weil die Grundmischung umso schneller abkühlt, je kälter der Kneter ist. Indessen ist die Kühlwirkung beim Mischprozess wichtig, weil die reaktiven Zuschläge bei guter Kühlung mit mehr Mischarbeit sicherer eingemischt werden können.

Ausgehend von dieser Erkenntnis liegt der Erfindung die Aufgabe zugrunde, die eingangs erwähnte Vorrichtung so zu verbessern, dass die anfallende Grundmischung schnell abgekühlt und der Fertigmischprozess schnell und sicher - ohne ein Anspringen od. dgl. der Mischung befürchten zu müssen - vollzogen werden kann.

Zur Lösung dieser Aufgabe ist erfindungsgemäss zumindest ein Teil, vorzugsweise aber der grösste Teil der aktiven Fläche des Rotors des der Herstellung der Fertigmischung dienenden Kneters ohne Oberflächenverschleisschutzschicht ausgeführt, während der übrige Teil die übliche Oberflächenbehandlung für den Verschleisschutz erhalten hat. Zudem ist der Grundmischer in üblicher Weise oberflächenverschleissgeschützt. Zweckmässigerweise werden jedoch beim Fertigmischer die dem Verschleiss besonders unterworfenen Flächenabschnitte berücksichtigt und demgemäss die in Wirkrichtung des Rotors vorne liegenden Kantenbereiche seiner Vorsprünge mit den Oberflächenschutz versehen und somit die übrigen Flächen der Vorsprünge sowie die Flächen auf der Sohle zwischen den Vorsprüngen von dem erwähnten Verschleisschutz freigehalten.

Mit diesem Vorschlag wird überraschender Weise die erfindungsgemässe Aufgabe gelöst, weil dem Kneter für die Fertigmischung heisse, plastizierte Mischung zugeführt wird und nur die reaktiven, nicht-abrasiven Stoffe zu verarbeiten und zu verteilen sind und gerade für diesen Zweck die genannten Verschleisschutzmassnahmen völlig ausreichend sind, zumal bei kleinen Umdrehungszahlen stempellos gearbeitet wird. Von noch grösserer Bedeutung ist aber die Tatsache, dass der Kneter ein weit verbessertes Kühlverhalten zeigt. Die Kühlwirkung ist beträchtlich, weil die erwähnte Verschleisschutzschicht nicht mehr gewissermassen als Isolationsschicht wirken kann. Damit erhöht sich auch die Abkühlgeschwindigkeit des geleerten Kneters um ein Vielfaches. Aus diesen Gründen kann die erfindungsgemässe Vorrichtung sogar für solche Mischungen benutzt werden, die aufgrund ihrer Scorcheinstellung bereits hätten anspringen müssen. Dieser Effekt ist vermutlich darauf zurückzuführen, dass aufgrund der guten Kühlwirkung die reaktiven Stoffe bevorzugt in bereits gekühlte Mischungsschichten eingearbeitet werden und durch das schlechte Wärmeleitverhalten des Kautschuks vor nachträglicher, schädlicher Wiedererwärmung geschützt sind.

Weitere Einzelheiten der Erfindung werden anhand der Zeichnung erläutert, in der ein Ausführungsbeispiel der Erfindung dargestellt ist. Es zeigen :
- Fig. 1: einen senkrechten Schnitt durch eine zum Teil schematisch wiedergegebene Vorrichtung zum Herstellen von Kautschukmischungen,
- Fig. 2: eine Rotorwelle mit Rotor - teilweise geschnitten - für den stempellosen Kneter zur Herstellung der Fertigmischung und
- Fig.3: eine der Fig. 2 entsprechende Darstellung eines Rotors für einen stempellosen Kneter, und zwar einen Längenabschnitt davon in der Ansicht.

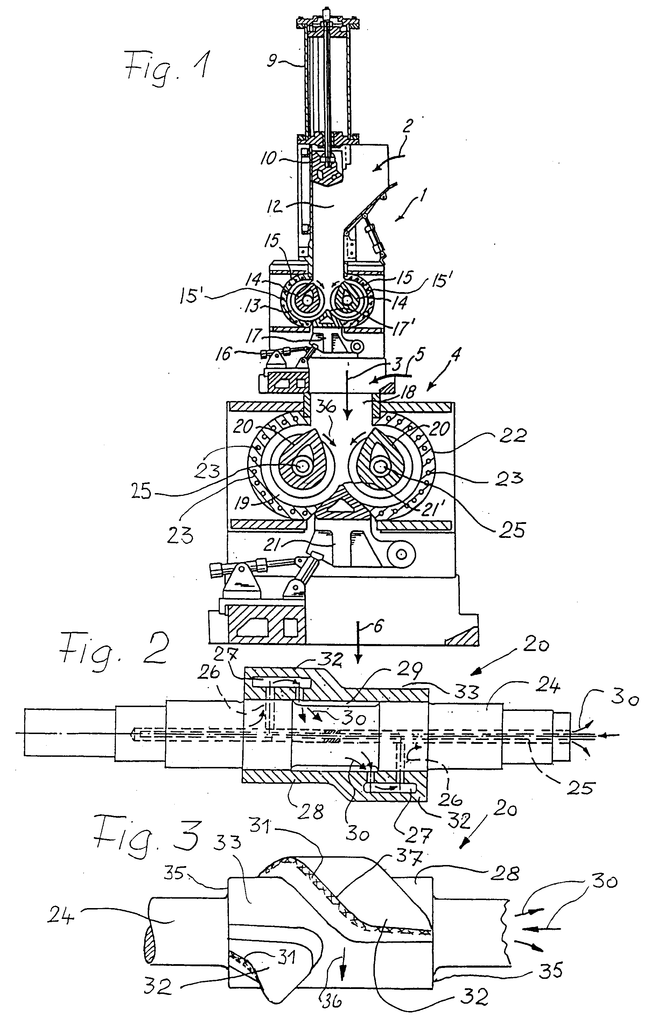

Oben an der Vorrichtung befindet sich ein Stempelkneter 1 zur Herstellung der Grundmischung; die inaktiven Zuschläge werden der Mischung im Sinne des Pfeiles 2 zugeführt. Die fertige Grundmischung wird im Sinne des Pfeiles 3 abgezogen und unmittelbar und ohne Zwischenlagerung dem Fertigmischer 4 chargenweise zugeführt, der ebenfalls in Chargen arbeitet. Dort kühlt die Mischung ab und wird dort auch mit den reaktiven Zuschlägen im Sinne des Pfeiles 5 versehen. Die fertige Mischung verlässt die Vorrichtung in üblicher Weise zur Aufgabe auf ein Walzwerk, eine Auftragschnecke od. dgl. im Sinne des Pfeiles 6.

Der Stempelkneter 1 verfügt über einen Arbeitszylinder 9 zum Betätigen des Stempels 10. Er wird durch den Einfüllstutzen 12 hindurchbewegt.

Die Mischkammer 13 des Stempelkneters 1 hat zwei Rotoren 14 innerhalb der beiden Trogschalen 15. Zum Betätigen der unten liegenden Verschlußklappe 17 mit dem Sattel 17' dient ein Arbeitszylinder 16.

Die die Mischkammer 13 begrenzenden aktiven Flächen, d.h. die Aussenflächen der Rotoren 14 und die Innenfläche der Trogschalen 15 sind in üblicher Weise mit einer Oberflächenverschleissschicht versehen, die auf der Basis von Chrom, Wolfram, Cobalt und Kohlenstoff ausgeführt ist und die Wandstärke von Millimetern hat. Zudem weist der Stempelkneter 1 die übliche Kanalkühlung für ein flüssiges Kühlmittel auf, und zwar für die Rotoren 14 über die Rotorwelle und die beiden Trogschalen 15 über die bei 15' angedeuteten Kühlkanäle.

Der Fertigmischer 4 hat eine Einfüllöffnung 18, Sie mündet in die Mischkammer 19 mit den sich gegenläufig bewegenden Rotoren 20. Der Verschluss nach unten wird von einer Klappe 21 mit Sattel 21' gebildet. Insg. gesehen hat der Fertigmischer 4 ein im Vergleich zum Grundmischer ( Stempelkneter 1 ) grösseres Fassungsvermögen, zudem wird er auch mit einer vergleichsweise geringeren Drehzahl betrieben. Der Fertigmischer 4 hat ausserdem keinen Stempel und wird im Regelfalle offen betrieben.

Die beiden Trogschalen 22 des Fertigmischers 4 haben Kühlkanäle 23, sie haben innen eine Verchromung, die ein guter Wärmeleiter ist, aber verhindert, dass sich Mischung an den Wandungen festsetzen kann.

Die Kühlung der beiden Rotoren 20 erfolgt von innen her durch zwei konzentrisch zur Rotorwelle 24 angeordnete Längskanäle 25, von denen aus radiale Kanäle 26 ausgehen, die in Hohlräume 27 des Rotormantels 28 münden und zudem einen Ringraum 29 zwischen Rotorwelle 24 und Rotormantel 28 speisen. Das Kühlwasser wird dabei im Sinne der Pfeile 30 zugeführt und abgeführt.

Wichtig ist, dass die aktive Aussenfläche der beiden ineinandergreifenden Rotoren 20 lediglich im radial aussen liegenden Randbereich 31 an der in Dreh- und Wirkrichtung der Rotoren 20 vorne liegende Seite der Vorsprünge 32 gegenüber der Mantelfläche 33 des Rotormantel 28 mit einem Oberflächenverschleissschutz ( durch Kreuze angezeigt ) versehen ist, und zwar auf der Basis Chrom/Kohlenstoff/Cobalt/Wolfram oder eine ähnlich eingestellte Schutz- und Abriebschicht, die die Stärke von Millimetern aufweist.

Der grösste Teil der aktiven Aussenfläche der beiden Rotoren 20 ist also unbewehrt. Daher kommt die schlechte Wärmeleitfähigkeit der genannten Abriebschichten nicht zur Wirkung, vielmehr ist die Oberflächenverschleisschutzschicht nur auf die wirklich notwendigen Bereiche beschränkt und erfüllt so noch ihre Aufgabe der Verschleissminderung im Bereich der aktiven Rotorkanten. In den Bereichen jedoch, die von der Schutzschicht nicht bedeckt sind, ergibt sich eine wesentlich gesteigerte Kühlwirkung für das aus dem Stempelkneter 1 unmittelbar in den Fertigmischer 4 gelangende Mischgut. Deshalb können auch hochempfindliche Mischungen mit entsprechender Scorcheinstellung sicher verarbeitet werden. Haben diese Mischungen jedoch die Mischkammer 19 verlassen, so kühlt diese wesentlich schneller ab im Vergleich zu den üblichen Mischkammern mit einem Verschleisschutz für die Rotoren und die Trogschalen.

Es sei noch erwähnt, dass die Stirnflächen 35 des Rotormantels 28 mit einer Verschleisschutzschicht ausgestattet sein können, da sie nicht zu den wirklich aktiven, mit der Mischung zwangsläufig in Berührung kommenden Flächen der Rotoren 20 gehören.

Es sei darauf hingewiesen, dass die Drehrichtung der Rotoren 20 mit den Pfeilen 36 angezeigt ist. Sie lassen die in Drehrichtung vorne liegenden Randbereiche 31 deutlich werden, die sich praktisch nur auf den von den Kanten 37 zu der Mantelfläche 33 hin erstreckenden Flächen der Vorsprünge 32 befinden.

Für die Oberflächenverschleisschutzschicht kommen vorzugsweise Stellite in Betracht, und zwar insb. Typ 1.

## Patentansprüche

1. Vorrichtung zum Herstellen von Kautschukmischungen mit einem chargenweise arbeitenden Stempelkneter für die Grundmischung und einem darunter befindlichen, ebenfalls chargenweise arbeitenden, zum Zumischen der reaktiven Zuschläge bestimmten, stempellosen Kneter für die Fertigmischung und zum Kühlen der Mischung, wobei die Grundmischung vom Stempelkneter aus ohne Zwischenlagerung dem stempellosen Kneter zuführbar ist, für die aktiven, mit der Gummimischung in Berührung kommenden Kneterflächen eine Oberflächenverschleisschutzschicht und Kühleinrichtungen für die Rotoren und die sie aufnehmenden Tröge der beiden Kneter vorgesehen sind, dadurch gekennzeichnet, dass zumindest ein Teil der aktiven Fläche des Rotors (20) des stempellosen Kneters (4) von einer Oberflächenverschleisschutzschicht frei, hingegen diese Schicht jedoch für den übrigen Teil der aktiven Fläche vorgesehen ist.

2. Vorrichtung nach Anspruch 1, dadurch gekennzeichnet, dass der grösste Teil der aktiven Fläche frei ist.

3. Vorrichtung nach Anspruch 1 und 2, dadurch gekennzeichnet, dass lediglich die am Rotor (20) befindlichen Vorsprünge (32) mit der Schicht versehen sind.

4. Vorrichtung nach Anspruch 3, dadurch gekennzeichnet, dass die Vorsprünge (32) lediglich im Bereich ihrer radial aussen liegenden Kanten mit der Schicht versehen sind.

5. Vorrichtung nach Anspruch 4, dadurch gekennzeichnet, dass die in Drehrichtung vorne liegenden Kantenbereiche (31) mit der Schicht versehen sind.

6. Vorrichtung nach Anspruch 5, dadurch gekennzeichnet, dass die Schichten ledglich an den Flächen der Vorsprünge (32) angeordnet sind, die sich von den Kanten hin zur Mantelfläche (33) des Rotors erstrecken.

7. Vorrichtung nach Anspruch 1, dadurch gekennzeichnet, dass die Innenflächen der Trogschalen (22) unter Verzicht auf eine Oberflächenverschleisschutzschicht verchromt sind.

8. Vorrichtung nach Anspruch 1, dadurch gekennzeichnet, dass die Rotoren (20) des stempellosen Kneters (4) in an sich bekannter Weise ineinandergreifen.

9. Vorrichtung nach Anspruch 1, dadurch gekennzeichnet, dass die Innenfläche der beiden Trogschalen des stempellosen Kneters (4) keine Oberflächenverschleisschutzschicht aufweist.

10. Vorrichtung nach Anspruch 1, dadurch gekennzeichnet, dass die Stirnflächen (25) der beiden Rotoren (20) eine Oberflächenverschleisschutzschicht aufweisen.

11. Vorrichtung nach Anspruch 1, dadurch gekennzeichnet, dass die aktiven Flächen des Stempelkneters (1), zumindest aber diejenigen der Rotoren (14) mit einer Oberflächen - verschleisschutzschicht versehen sind.

12. Vorrichtung nach Anspruch 1, dadurch gekennzeichnet, dass der stempellose Kneter (4) im Vergleich zum Stempelkneter (1) in bekannter Weise ein grösseres Fassungsvermögen und eine kleinere Betriebsdrehzahl seiner Rotoren (20) hat.

13. Vorrichtung nach Anspruch 1, dadurch gekennzeichnet, dass auch die aktive, innere Fläche der beiden Trogschalen (22) des stempellosen Kneters (4) teilweise mit einer Oberflächenverschleisschutzschicht versehen ist.

## Claims

1. Device for producing rubber mixtures, having a chargewisely operating ram-type masticator for the basic mixture and a likewise chargewisely operating ramless masticator, which is situated therebeneath and is intended for the admixing of the reactive additions, for masticating the final mixture and for cooling the mixture, the basic mixture being feedable to the ramless masticator from the ram-type masticator without any interposition, and a wear-resistant surface layer and cooling means for the rotors and the troughs accommodating them of the two masticators are provided for the active masticator faces which come into contact with the rubber mixture, characterised in that at least one portion of the active face of the rotor (20) of the ramless masticator (4) has no wear-resistant surface layer, but this layer, however, is provided for the remaining portion of the active face.

2. Device according to claim 1, characterised in that the largest portion of the active face is free.

3. Device according to claims 1 and 2, characterised in that only the projection members (32), which are situated on the rotor (20), are provided with the layer.

4. Device according to claim 3, characterised in that the projection members (32) are provided with the layer only in the region of their radially externally situated edges.

5. Device according to claim 4, characterised in that the edge regions (31), which are situated at the front when viewed with respect to the direction of rotation, are provided with the layer.

6. Device according to claim 5, characterised in that the layers are merely disposed on the faces of the projection members (32) which extend from the edges towards the surface (33) of the rotor.

7. Device according to claim 1, characterised in that the internal faces of the trough-like containers (22) are chrome-plated apart from a surface wear-resistant layer.

8. Device according to claim 1, characterised in that the rotors (20) of the ramless masticator (4) engage in one another in a manner known per se.

9. Device according to claim 1, characterised in that the internal face of the two trough-like containers of the ramless masticator (4) has no wear-resistant surface layer.

10. Device according to claim 1, characterised in that the end faces (25) of the two rotors (20) have a wear-resistant surface layer.

11. Device according to claim 1, characterised in that the active faces of the ram-type masticator (1), but at least those of the rotors (14), are provided with a wear-resistant surface layer.

12. Device according to claim 1, characterised in that, when compared with the ram-type masticator (1), the ramless masticator (4) has in known manner a greater holding capacity, and its rotors (20) have a lower operational speed of rotation.

13. Device according to claim 1, characterised in that the active, internal face of the two trough-like containers (22) of the ramless masticator (4) is also partially provided with a wear-resistant surface layer.

## Revendications

1. Machine pour préparer des mélanges de caoutchouc, comprenant un malaxeur à piston travaillant par charges successives, pour le mélange de base et un malaxeur sans piston, placé au-dessous, travaillant également par charges successives, destiné à ajouter et mélanger les réactifs additionnels, pour le mélange final et le refroidissement du mélange, dans laquelle le mélange de base peut être acheminé du malaxeur à piston au malaxeur sans piston sans stockage intermédiaire, et dans laquelle il est prévu, pour les surfaces actives des malaxeurs, qui entrent en contact avec le mélange de caoutchouc, une couche superficielle de protection anti-usure, ainsi que des dispositifs de refroidissement pour les rotors et pour les auges des deux malaxeurs qui reçoivent ces rotors, caractérisée en ce qu'au moins une partie de la surface active du rotor (20) du malaxeur sans piston (4) est exempte d'une couche superficielle de protection anti-usure tandis qu'au contraire, cette couche est prévue pour la partie restante de la surface active.

2. Machine selon la revendication 1, caractérisée en ce que la plus grande partie de la surface active est exempte.

3. Machine selon la revendication 1 ou 2, caractérisée en ce que seules les saillies (32) situées sur le rotor (20) sont munies de la couche.

4. Machine selon la revendication 3, caractérisée en ce que les saillies (32) ne sont munies de la couche que dans la région de leurs bords situés radialement à l'extérieur.

5. Machine selon la revendication 4, caractérisée en ce que les régions de bords (31) situées en avant dans le sens de la rotation sont munies de la couche.

6. Machine selon la revendication 5, caractérisée en ce que les couches sont disposées exclusivement sur les surfaces des saillies (32) qui s'étendent des bords jusqu'à la surface cylindrique (33) du rotor.

7. Machine selon la revendication 1, caractérisée en ce que les surfaces internes des coques des auges (22) sont chromées, et ne portent pas de couche superficielle de protection anti-usure.

8. Machine selon la revendication 1, caractérisée en ce que les rotors (20) du malaxeur sans piston (4) engrènent l'un dans l'autre d'une façon connue en soi.

9. Machine selon la revendication 1, caractérisée en ce que la surface interne des deux coques des auges du malaxeur sans piston (4) ne présente pas de couche superficielle de protection anti-usure.

10. Machine selon la revendication 1, caractérisée en ce que les surfaces frontales (25) des deux rotors (20) présentent une couche superficielle de protection anti-usure.

11. Machine selon la revendication 1, caractérisée en ce que les surfaces actives du malaxeur à piston (1), du moins celles des rotors (14), sont munies d'une couche superficielle de protection anti-usure.

12. Machine selon la revendication 1, caractérisée en ce que, d'une façon connue, le malaxeur sans piston (4) possède, comparativement au malaxeur à piston (1), une plus grande capacité et une plus petite vitesse de rotation des rotors (20).

13. Machine selon la revendication 1, caractérisée en ce que la surface intérieure active des deux coques d'auges (22) du malaxeur sans piston (4) est munie en partie d'une couche superficielle de protection anti-usure.
